# EUROPÄISCHE PATENTANMELDUNG

(11) **EP 3 960 782 A1**
(43) Veröffentlichungstag der Anmeldung: **02.03.2022**
(21) Anmeldenummer: 20193104.5
(22) Anmeldetag: 27.08.2020
(51) Int. Cl.: C08G 18/24, C08G 18/36, C08G 18/38, C08G 18/48, C08G 18/66, C08G 18/79

(54) **POLYURETHANZUSAMMENSETZUNG GEEIGNET ALS BODENBESCHICHTUNG MIT EINSTELLBARER TOPFZEIT**

(71) Anmelder: SIKA TECHNOLOGY AG, 6340 Baar (CH)
(72) Erfinder: Leedle, Linda, 70825 Korntal Münchingen (DE); Salewski, Christine, 74360 Ilsfeld (DE); Pusel, Thomas, 71282 Hemmingen (DE); Grötzinger, Jochen, 73525 Schwäbisch Gmünd (DE); Feile, Marina, 71711 Murr (DE)
(74) Vertreter: Sika Patent Attorneys

(57) **Zusammenfassung**

Die vorliegende Erfindung betrifft eine Polyurethanzusammensetzung umfassen eine erste Komponente **A** und eine zweite Komponente **B.** Die erste Komponente **A** umfasst eine Polyolmischung **P,** enthaltend
-mindestens ein Polyol **P1** mit einem durchschnittlichen Molekulargewicht von 800 bis 30'000 g / mol, wobei das Polyol **P1** ein polyhydroxyfunktionelles Fett und / oder ein polyhydroxyfunktionelles Öl ist, oder ein Polyol, das durch chemische Modifizierung von natürlichen Fetten und / oder natürlichen Ölen erhalten wird; und
-vorzugsweise mindestens ein Polyol **P2** ausgewählt aus der Gruppe bestehend aus Polyesterpolyolen und Polyetherpolyolen.

Die zweite Komponente **B** umfasst mindestens ein aliphatisches Polyisocyanat **I** und die Polyurethanzusammensetzung weist zusätzlich mindestens einen Füllstoffs **F** auf. Die Polyurethanzusammensetzung umfasst weiter einen Zinnkatalysator **K** für die Reaktion von Hydroxylgruppen und Isocyanatgruppen, der Thiokomplexe bilden kann, und mindestens eine Verbindung **T,** die mindestens eine Thiolgruppe aufweist, wobei das molare Verhältnis aller Thiolgruppen der mindestens einen Verbindung **T** zu allen Metallatomen des mindestens einen Zinnkatalysators **K** (**T/K**) von 2.2:1 bis 40:1 liegt und das molare Verhältnis aller NCO-Gruppen der Polyurethanzusammensetzung zu allen Metallatomen des mindestens einen Zinnkatalysators **K (NCO/K)** von 50 bis 1500 liegt.

Die Polyurethanzusammensetzung eignet sich zur Herstellung von Bodenbeschichtungen und weisen unabhängig von den Aushärtungsbedingungen sowohl eine lange Topfzeit wie auch eine kurze Aushärtungszeit, welche bei Bedarf angepasst werden kann.

## Beschreibung

### Technisches Gebiet

Die Erfindung betrifft das Gebiet der Polyurethanzusammensetzungen und ihre Verwendung, insbesondere als Bodenbeschichtung.

### Stand der Technik

Zweikomponentige Polyurethanzusammensetzungen auf Basis von Polyolen und Polyisocyanaten werden bereits seit langem als Bodenbeschichtungen eingesetzt. Zweikomponentige Polyurethanzusammensetzungen haben gegenüber einkomponentigen den Vorteil, dass sie nach dem Mischen schneller aushärten und deshalb nach kürzerer Zeit begehbar sind. Für den Einsatz als Bodenbeschichtungen werden hohe Ansprüche in Bezug auf Festigkeit und Anhaftungskräfte an solche Zusammensetzungen gestellt.

Diese sollen unabhängig von den Aushärtungsbedingungen erreicht werden und sowohl eine lange Topfzeit wie auch eine kurze Aushärtungszeit aufweisen. Wünschenswert wären eine Offenzeit von 10 min - 5 h sowie eine Aushärtungszeit von 20 min - 6 h bei Aushärtungsbedingungen mit einem Temperaturbereich von 8°C bis 35°C, insbesondere bei 50% relativer Luftfeuchtigkeit.

Besonders wünschenswert wäre es, Topfzeit und Aushärtungszeit auf der Baustelle den vorherrschenden Aushärtungsbedingungen anzupassen, respektive nach Wunsch einzustellen.

Für die Anwendung von Polyurethanzusammensetzungen als Bodenbeschichtungen ist es generell wünschenswert, eine genügend lange Topfzeit für die Applikation auf das Substrat mit einer anschliessend zügigen Aushärtung und schneller Überarbeitbarkeit/Begehbarkeit kombinieren zu können. Dies lässt sich mit heutigen Zweikomponentenzusammensetzungen aber kaum erreichen. Entweder ist die Topfzeit zu kurz bei Zusammensetzungen, die rasch aushärten und Festigkeit aufbauen, oder aber die Aushärtung und der Festigkeitsaufbau sind langsam, wenn Zusammensetzungen mit langer Topfzeit verarbeitet werden.

Es wurden in anderen technischen Gebieten zweikomponentige Polyurethanzusammensetzungen entwickelt, die eine lange, sogar innerhalb gewisser Grenzen einstellbare Topfzeit aufweisen, so dass eine Verarbeitung auch grösserer Bau- oder Fertigungsteile möglich ist, aber die nach Applikation auch sehr rasch aushärten und innert Stunden bis wenigen Tagen, Festigkeiten und Elastizität im Sinne von strukturellen Verklebungen aufweisen. Eine solche zweikomponetige Polyurethanzusammensetzung im Bereich des strukturellen Klebens ist in WO 2019/002538 A1 offenbart. Diese Veröffentlichung lehrt spezielle Katalysatorsysteme umfassend einen Metallkatalysator und Thiolgruppen-haltige Verbindungen, welche eine einstellbare Topfzeit und anschliessend eine rasche Aushärtung der Zusammensetzung erlauben.

Im Bereich der Lackindustrie offenbart EP 0454219 Polyurethanzusammensetzung basierend auf Polyacrylpolyolen, aliphatischen Polyisocyanaten, einen mit Trimethylolpropane tris(3-mercaptopropionate) komplexierten Dibutylzinndilaurat-Katalysator und einem hohen Anteil an organischen Lösungsmitteln.

US 2019/0106527 A1 offenbart Beschichtungen für Fahrzeuge umfassend ein Polyol, vorzugsweise Polyesterpolyole oder Polyacrylatpolyole, ein Polyisocyanat, einen Katalysator, eine tertiäre Säure, gegebenenfalls ein Komplexbildner, der mindestens eine -SH-Gruppe enthält und einem hohen Anteil an organischen Lösungsmitteln.

Es wäre daher wünschenswert, Polyurethanzusammensetzungen für Bodenbeschichtungen zur Verfügung zu stellen, welche die mechanischen Anforderungen erfüllen und unabhängig von den Aushärtungsbedingungen sowohl eine lange Topfzeit wie auch eine kurze Aushärtungszeit aufweisen, welche bei Bedarf angepasst werden kann.

### Darstellung der Erfindung

Aufgabe der vorliegenden Erfindung ist es daher, eine Polyurethanzusammensetzungen für Bodenbeschichtungen zur Verfügung zu stellen, welche die mechanischen Anforderungen erfüllen und unabhängig von den Aushärtungsbedingungen sowohl eine lange Topfzeit wie auch eine kurze Aushärtungszeit aufweisen, welche bei Bedarf angepasst werden kann.

Überraschenderweise wird diese Aufgabe mit der erfindungsgemässen Polyurethanzusammensetzung gemäss Anspruch 1 gelöst. Weitere Aspekte der Erfindung sind Gegenstand weiterer unabhängiger Ansprüche. Besonders bevorzugte Ausführungsformen der Erfindung sind Gegenstand der abhängigen Ansprüche.

### Wege zur Ausführung der Erfindung

Die vorliegende Erfindung betrifft Polyurethanzusammensetzung umfassend eine erste Komponente **A** und eine zweite Komponente **B,** wobei
- die erste Komponente **A**
   - eine Polyolmischung **P** aufweist, enthaltend
      - mindestens ein Polyol **P1** mit einem durchschnittlichen Molekulargewicht von 800 bis 30'000 g / mol, vorzugsweise 850 bis 20'000 g / mol, bevorzugter 900 bis 10'000 g / mol, wobei das Polyol **P1:**
         ein polyhydroxyfunktionelles Fett und / oder ein polyhydroxyfunktionelles Öl ist, oder
         ein Polyol, das durch chemische Modifizierung von natürlichen Fetten und / oder natürlichen Ölen erhalten wird; und
      - vorzugsweise mindestens ein Polyol **P2** ausgewählt aus der Gruppe bestehend aus Polyesterpolyolen und Polyetherpolyolen; und
- die zweite Komponente **B**
   - mindestens ein aliphatisches Polyisocyanat **I** umfasst;
wobei die Polyurethanzusammensetzung zusätzlich 5 Gew.-% bis 70 Gew.-% mindestens eines Füllstoffs **F,** bezogen auf das Gesamtgewicht der Polyurethanzusammensetzung, aufweist, sowie mindestens einen Zinnkatalysator **K** für die Reaktion von Hydroxylgruppen und Isocyanatgruppen umfasst, der Thiokomplexe bilden kann, und mindestens eine Verbindung **T,** die mindestens eine Thiolgruppe aufweist, und das molare Verhältnis aller Thiolgruppen der mindestens einen Verbindung **T** zu allen Metallatomen des mindestens einen Zinnkatalysators **K (T/K)** von 2.2:1 bis 40:1 liegt und das molare Verhältnis aller NCO-Gruppen der Polyurethanzusammensetzung zu allen Metallatomen des mindestens einen Zinnkatalysators **K (NCO/K)** von 50 bis 1500 liegt.

Die Vorsilbe "Poly" in Substanzbezeichnungen wie "Polyol", "Polyisocyanat", "Polyether" oder "Polyamin" weist im vorliegenden Dokument darauf hin, dass die jeweilige Substanz formal mehr als eine der in ihrer Bezeichnung vorkommenden funktionellen Gruppe pro Molekül enthält.
Der Begriff "Polymer" umfasst im vorliegenden Dokument einerseits ein Kollektiv von chemisch einheitlichen, sich aber in Bezug auf Polymerisationsgrad, Molmasse und Kettenlänge unterscheidenden Makromolekülen, das durch eine Polyreaktion (Polymerisation, Polyaddition, Polykondensation) hergestellt wurde. Der Begriff umfasst andererseits auch Derivate eines solchen Kollektivs von Makromolekülen aus Polyreaktionen, Verbindungen also, die durch Umsetzungen, wie beispielsweise Additionen oder Substitutionen, von funktionellen Gruppen an vorgegebenen Makromolekülen erhalten wurden und die chemisch einheitlich oder chemisch uneinheitlich sein können. Der Begriff umfasst weiterhin auch so genannte Prepolymere, das heisst reaktive oligomere Voraddukte, deren funktionelle Gruppen am Aufbau von Makromolekülen beteiligt sind.
Unter "Molekulargewicht" versteht man im vorliegenden Dokument die molare Masse (in Gramm pro Mol) eines Moleküls oder eines Molekül-Rests. Als "mittleres Molekulargewicht" wird das Zahlenmittel Mₙ einer polydispersen Mischung von oligomeren oder polymeren Molekülen oder Molekül-Resten bezeichnet, welches üblicherweise mittels Gelpermeationschromatographie (GPC) gegen Polystyrol als Standard bestimmt wird.
Gewichtsprozente, abgekürzt Gew.-%, bezeichnen Massenanteile eines Bestandteils einer Zusammensetzung, bezogen auf die gesamte Zusammensetzung, falls nichts anderes angeben. Die Begriffe "Masse" und "Gewicht" werden im vorliegenden Dokument synonym benutzt.
Als "primäre Hydroxylgruppe" wird eine OH-Gruppe bezeichnet, welche an ein C-Atom mit zwei Wasserstoffen gebunden ist.
Als "Topfzeit" wird in diesem Dokument die Zeit bezeichnet, innerhalb welcher die Polyurethanzusammensetzung nach dem Mischen der Komponenten verarbeitet werden kann, bevor die Viskosität durch das Voranschreiten der Vernetzungsreaktion zu hoch für eine weitere Verarbeitung geworden ist.

Als "Aushärtungszeit" wird in diesem Dokument die Zeit bezeichnet, welche benötigt wird, um eine ausreichende Härte der Polyurethanzusammensetzung sicherzustellen, insbesondere in Bezug auf ihre Überarbeitbarkeit/Begehbarkeit. Der Begriff "Festigkeit" bezeichnet im vorliegenden Dokument die Festigkeit der ausgehärteten Zusammensetzung, wobei mit Festigkeit insbesondere die Zugfestigkeit und das Elastizitätsmodul (E-Modul), insbesondere im Dehnungsbereich 0.05 bis 0.25% oder im Bereich von 0.5 bis 5.0%, gemeint sind.
Als "Raumtemperatur" wird im vorliegenden Dokument eine Temperatur von 23°C bezeichnet.
Als "lagerstabil" oder "lagerfähig" wird eine Substanz oder eine Zusammensetzung bezeichnet, wenn sie bei Raumtemperatur in einem geeigneten Gebinde während längerer Zeit, typischerweise mindestens 3 Monaten bis zu 6 Monaten und mehr, aufbewahrt werden kann, ohne dass sie sich in ihren An-wendungs- oder Gebrauchseigenschaften, insbesondere der Viskosität und der Vernetzungsgeschwindigkeit, durch die Lagerung in einem für ihren Gebrauch relevanten Ausmass verändert.
Alle im Dokument erwähnten Industriestandards und Normen beziehen sich auf die zum Zeitpunkt der Einreichung der Erstanmeldung gültigen Fassungen.
Die "mittlere OH-Funktionalität" stellt die Anzahl der OH-Gruppen pro Polymermolekül, gemittelt über alle Polymermoleküle, dar. Enthalten beispielsweise 50% aller Polymermoleküle zwei und die anderen 50% drei Hydroxygruppen, so ergibt sich eine mittlere OH-Funktionalität von 2,5. Die mittlere OH-Funktionalität kann insbesondere durch Berechnung aus der Hydroxyzahl und dem über GPC ermittelten Molekulargewicht Mₙ ermittelt werden.

Die erfindungsgemässe Polyurethanzusammensetzung umfasst eine erste Komponente **A** und eine zweiten Komponente **B,** welche erst bei der Applikation der Polyurethanzusammensetzung gemischt werden und vorher in getrennten Verpackungen aufbewahrt werden.

Die erste Komponente **A** enthält eine Polyolmischung **P.**

Vorzugsweise beträgt der Anteil der Polyolmischung **P** 5 Gew.-% bis 90 Gew.-%, vorzugsweise 10 Gew.-% bis 80 Gew.-%, 20 Gew.-% bis 70 Gew.-%, 30 Gew.-% bis 60 Gew.-%, insbesondere 40 Gew.-% bis 50 Gew.-%, bezogen auf die Komponente **A.**

Es kann weiter vorteilhaft sein, wenn der Anteil der Polyolmischung **P** 5 Gew.-% bis 70 Gew.-%, vorzugsweise 10 Gew.-% bis 60 Gew.-%, 15 Gew.-% bis 50 Gew.-%, 20 Gew.-% bis 45 Gew.-%, insbesondere 30 Gew.-% bis 40 Gew.-%, bezogen auf das Gesamtgewicht der Polyurethanzusammensetzung, beträgt.

Die Polyolmischung **P** enthält mindestens ein Polyol **P1** mit einem durchschnittlichen Molekulargewicht von 800 bis 30'000 g / mol, vorzugsweise 850 bis 20'000 g / mol, bevorzugter 900 bis 10'000 g / mol, wobei das Polyol **P1:**
ein polyhydroxyfunktionelles Fett und / oder ein polyhydroxyfunktionelles Öl ist, oder
ein Polyol, das durch chemische Modifizierung von natürlichen Fetten und / oder natürlichen Ölen erhalten wird.

Beispiele für chemisch modifizierte natürliche Fette und / oder Öle sind Polyole, die aus Epoxypolyestern oder Epoxypolyethern erhalten werden, die beispielsweise durch Epoxidierung von ungesättigten Ölen, durch anschließende Ringöffnung mit Carbonsäuren oder Alkoholen erhalten werden, Polyole, die durch Hydroformylierung und Hydrierung von ungesättigten Ölen erhalten werden, oder Polyole die aus natürlichen Fetten und / oder Ölen durch Abbauprozesse wie Alkoholyse oder Ozonolyse und anschließende chemische Verknüpfung der so erhaltenen Abbauprodukte oder Derivate davon, beispielsweise durch Umesterung oder Dimerisierung, erhalten werden. Geeignet sind auch Polyole, die durch Polyoxyalkylierung von natürlichen Ölen wie Rizinusöl erhalten werden und beispielsweise unter dem Handelsnamen Lupranol Balance^{®} der Elastogran GmbH erhältlich sind. Geeignete Abbauprodukte von natürlichen Fetten und / oder Ölen sind insbesondere Fettsäuren und Fettalkohole und Fettsäureester, insbesondere die Methylester (FAME), die beispielsweise durch Hydroformylierung und Hydrierung zu Hydroxyfettsäure derivatisiert werden können Ester.

Die oben erwähnten Polyole **P1** haben gewöhnlich ein relativ hohes durchschnittliches Molekulargewicht zwischen 800 und 30'000 g / mol, vorzugsweise zwischen 850 und 20'000 g / mol, bevorzugter zwischen 900 und 10'000 g / mol und vorzugsweise ein durchschnittliche OH-Funktionalität im Bereich von 1,6 bis 3.

Vorzugsweise ist das Polyol **P1** Rizinusöl oder eine chemische Modifikation davon, insbesondere eine chemische Modifikation von Rizinusöl, besonders bevorzugt ein Reaktionsprodukt von Rizinusöl mit Ketonharzen.

Besonders bevorzugt handelt es sich bei dem Polyol **P1** um ein Polyol mit einer OH-Zahl von 110 bis 200 mg KOH / g. Bevorzugt wird eine OH-Zahl von 140 bis 190 mg, insbesondere 140 bis 170 mg, insbesondere bevorzugt 150 bis 170 mg KOH / g.

Besonders bevorzugt werden Reaktionsprodukte von Rizinusöl mit Ketonharzen auf Cyclohexanonbasis, insbesondere solche, die beispielsweise von der Nuplex Resins GmbH, Deutschland, unter dem Namen Setathane^{®} 1150, Setathane^{®} 1155 und Setathane^{®} 1160 verkauft werden.
In dem vorliegenden Dokument wird der Begriff "Rizinusöl" vorzugsweise so verstanden, dass er Rizinusöl bedeutet, wie es im Online Römpp Chemie Lexikon (Thöme Verlag) beschrieben ist, abgerufen am 23.12.2016.
In dem vorliegenden Dokument wird der Begriff "Ketonharz" vorzugsweise so verstanden, dass er Ketonharz bedeutet, wie in Online Römpp Chemie Lexikon, Thieme Verlag, abgerufen am 23.12.2016, beschrieben.

Vorzugsweise enthält die Polyolmischung **P** mindestens ein Polyol **P2** ausgewählt aus der Gruppe bestehend aus Polyesterpolyolen und Polyetherpolyolen.

Das Polyol **P2** weist in allen Ausführungsformen bevorzugt ein mittleres Molekulargewicht im Bereich von 400 bis 6'000 g/mol, insbesondere 450 bis 5'500 g/mol, besonders bevorzugt 500 bis 5'000 g/mol, 750 bis 3'000 g/mol, am meisten bevorzugt 1000 bis 2'000 g/mol, auf.

Das Polyol **P2** weist in allen Ausführungsformen bevorzugt eine mittlere OH-Funktionalität im Bereich von 2 bis 4, insbesondere 2 bis 3.5, besonders bevorzugt 2 bis 3, auf.

Das Polyol **P2** weist in allen Ausführungsformen bevorzugt eine OH-Zahl im Bereich von 20 bis 600 mg KOH/g, 50 bis 600 mg KOH/g, 100 bis 600 mg KOH/g, insbesondere 200 bis 600 mg KOH/g, 300 bis 600 mg KOH/g, besonders bevorzugt 350 bis 600 mg KOH/g, auf.

Als Polyetherpolyole, auch Polyoxyalkylenpolyole oder Oligoetherole genannt, sind insbesondere jene als Polymer **P2** geeignet, welche Polymerisationsprodukte von Ethylenoxid, 1,2-Propylenoxid, 1,2- oder 2,3-Butylenoxid, Oxetan, oder Mischungen davon sind, gegebenenfalls polymerisiert mit Hilfe eines Startermoleküls mit zwei oder mehreren aktiven Wasserstoffatomen wie beispielsweise Wasser, Ammoniak oder Verbindungen mit mehreren OH- oder NH-Gruppen wie beispielsweise 1,2-Ethandiol, 1,2-und 1,3-Propandiol, Neopentylglykol, Diethylenglykol, Triethylenglykol, die isomeren Dipropylenglykole und Tripropylenglykole, die isomeren Butandiole, Pentandiole, Hexandiole, Heptandiole, Octandiole, Nonandiole, Decandiole, Undecandiole, 1,3- und 1,4-Cyclohexandimethanol, Bisphenol A, hydriertes Bisphenol A, 1,1,1-Trimethylolethan, 1,1,1-Trimethylolpropan, Glycerin, Anilin, sowie Mischungen der genannten Verbindungen. Eingesetzt werden können sowohl Polyoxyalkylenpolyole, die einen niedrigen Ungesättigtheitsgrad aufweisen (gemessen nach ASTM D-2849-69 und angegeben in Milliäquivalent Ungesättigtheit pro Gramm Polyol (mEq/g)), hergestellt beispielsweise mit Hilfe von so genannten Double Metal Cyanide Komplex-Katalysatoren (DMC-Katalysatoren), als auch Polyoxyalkylenpolyole mit einem höheren Ungesättigtheitsgrad, hergestellt beispielsweise mit Hilfe von anionischen Katalysatoren wie NaOH, KOH, CsOH oder Alkalialkoholaten.

Besonders geeignet als Polyol **P2** sind Polyoxyethylenpolyole und Polyoxypropylenpolyole, insbesondere Polyoxyethylendiole, Polyoxypropylendiole, Polyoxyethylentriole und Polyoxypropylentriole.

Insbesondere geeignet als Polyol **P2** sind Polyoxyalkylendiole oder Polyoxyalkylentriole mit einem Ungesättigtheitsgrad tiefer als 0.02 mEq/g und mit einem Molekulargewicht im Bereich von 1000 bis 15'000 g/mol, sowie Polyoxyethylendiole, Polyoxyethylentriole, Polyoxypropylendiole und Polyoxypropylentriole mit einem Molekulargewicht von 400 bis 15'000 g/mol.

Ebenfalls als Polyol **P2** besonders geeignet sind so genannte Ethylenoxid-terminierte ("EO-endcapped", ethylene oxide-endcapped) Polyoxypropylenpolyole. Letztere sind spezielle Polyoxypropylenpolyoxyethylenpolyole, die beispielsweise dadurch erhalten werden, dass reine Polyoxypropylenpolyole, insbesondere Polyoxypropylendiole und -triole, nach Abschluss der Polypropoxylierungsreaktion mit Ethylenoxid weiter alkoxyliert werden und dadurch primäre Hydroxylgruppen aufweisen. Bevorzugt sind in diesem Fall Polyoxypropylenpolyoxyethylendiole und Polyoxypropylenpolyoxyethylentriole.
Geeignete solche Polyether-basierte Polymere P2 sind beispielsweise erhältlich unter den Handelsnamen Acclaim^{®} und Desmophen^{®} von Covestro, insbesondere Acclaim^{®} 4200, Desmophen^{®} 5034, Desmophen^{®} 1381 BT und Desmophen^{®} 28HS98, unter dem Handelsnamen Voranol^{®} von Dow, insbesondere Voranol^{®} EP 1900 und Voranol^{®} CP 4755, sowie unter dem Handelsnamen Dianol^{®} von Arkema, insbesondere Dianol^{®} 3130 HP.

Als Polyesterpolyole sind insbesondere Polyester geeignet, welche mindestens zwei Hydroxylgruppen tragen und nach bekannten Verfahren, insbesondere der Polykondensation von Hydroxycarbonsäuren oder der Polykondensation von aliphatischen und/oder aromatischen Polycarbonsäuren mit zwei- oder mehrwertigen Alkoholen, hergestellt werden.
Insbesondere geeignet sind Polyesterpolyole, welche hergestellt sind aus zwei- bis dreiwertigen Alkoholen wie beispielsweise 1,2-Ethandiol, Diethylenglykol, 1,2-Propandiol, Dipropylenglykol, oder Mischungen der vorgenannten Alkohole mit organischen Dicarbonsäuren oder deren Anhydriden oder Estern wie beispielsweise Bernsteinsäure, Glutarsäure, Adipinsäure, Trimethyladipinsäure, Maleinsäure, Fumarsäure, Phthalsäure, Phthalsäureanhydrid, Isophthalsäure, Terephthalsäure, Dimethylterephthalat, Hexahydrophthalsäure, Trimellithsäure und Trimellithsäureanhydrid oder Mischungen der vorgenannten Säuren, sowie Polyesterpolyole aus Lactonen wie beispielsweise ε-Caprolacton.
Besonders geeignet sind hydrophile Polyesterdiole, insbesondere solche, die hergestellt sind aus Adipinsäure, Phthalsäure, Isophthalsäure und Terephthalsäure als Dicarbonsäure oder aus Lactonen wie beispielsweise ε-Caprolacton und aus Ethylenglykol, Diethylenglykol, Neopentylglykol, 1,4-Butandiol, 1,6-Hexandiol, und 1,4-Cyclohexandimethanol als zweiwertigem Alkohol.

Als Polyesterpolyole geeignet sind beispielsweise solche erhältlich unter dem Handelsnamen Kuraray^{®} von Kuraray, insbesondere Kuraray^{®} F-510, und solche erhältlich unter dem Handelsnamen K-Flex^{®} von King Industries, insbesondere K-Flex^{®} 188.

Besonders geeignete Polyole **P2** sind Polyetherpolyole, insbesondere ausgewählt aus der Liste bestehend aus Polyoxyethylenpolyol, Polyoxypropylenpolyol und Polyoxypropylenpolyoxyethylenpolyol, bevorzugt Polyoxyethylendiol, Polyoxypropylendiol, Polyoxyethylentriol, Polyoxypropylentriol, Polyoxypropylenpolyoxyethylendiol und Polyoxypropylenpolyoxyethylentriol, am meisten bevorzugt ist Polyoxypropylentriol.

Am meisten bevorzugt ist das Polyol **P2** ein Polyetherpolyol, insbesondere ein Polyetherpolyol mit einer mittleren OH-Funktionalität von mindestens 2.5 und bevorzugt mit Propylenglykol-Repetiereinheiten im Polymerrückgrat.

Vorzugsweise beträgt das Gewichtsverhältnis des Polyols **P1** zum Polyol **P2** ((**P1**) / (**P2**)) von 1,25 bis 2,5, vorzugsweise 1,5 bis 2,25, am meisten bevorzugt 1,75 bis 2,0. Ein Verhältnis von weniger als 1,25 führt zum tieferen Dehnungswerten, ein Verhältnis von mehr als 2,5 führt zu tieferen mechanischen Eigenschaften und Zähigkeit.

Vorzugsweise beträgt die Gesamtmenge der Summe des Polyols **P1** und des Polyols **P2** mehr als 75 Gew .-%, vorzugsweise als 80 Gew .-%, als 90 Gew .-%, als 95 Gew .-%, insbesondere als 98 Gew .-%, der Polyolmischung **P.**

Vorzugsweise weist die Polyolmischung **P** mehr als 80 Gew .-%, mehr als 90 Gew .-%, mehr als 95 Gew .-%, insbesondere mehr als 98 Gew .-%, der Gesamtmenge der NCO-reaktiven Gruppen der Polyurethanzusammensetzung auf.

Die zweite Komponente **B** umfasst mindestens ein aliphatisches Polyisocyanat I.

Als "aliphatisches Isocyanat" wird ein Isocyanat bezeichnet, dessen Isocyanatgruppen direkt an ein aliphatisches C-Atom gebunden sind. Dementsprechend werden solche Isocyanatgruppen als "aliphatische Isocyanatgruppen" bezeichnet.

Geeignete aliphatische Polyisocyanate **I** sind insbesondere monomere Di- oder Triisocyanaten, sowie Oligomere, Polymere und Derivate von monomeren Di- oder Triisocyanate, sowie beliebige Mischungen davon.

Als aliphatische monomere Polyisocyanate bevorzugt sind aliphatische oder cycloaliphatische Diisocyanate, insbesondere HDI, TMDI, Cyclohexan-1,3- oder -1,4-diisocyanat, IPDI, H₁₂MDI, 1,3- oder 1,4-Bis-(isocyanatomethyl)cyclohexan und XDI.

Ein besonders bevorzugtes monomeres Polyisocyanat ist HDI, IPDI oder H₁₂MDI. Am meisten bevorzugt ist HDI oder IPDI, insbesondere HDI.

Geeignete Oligomere, Polymere und Derivate der genannten monomeren Di- und Triisocyanate sind insbesondere abgeleitet von HDI oder IPDI, insbesondere HDI. Davon insbesondere geeignet sind kommerziell erhältliche Typen, beispielsweise Desmodur^{®} N 75, Desmodur^{®} N 3600 und Desmodur^{®} N 3900 (alle von Covestro). Vorzugsweise weisen sie einen NCO-Gehalt von 16 bis 24 Gewichts-% auf, vorzugsweise 20 bis 24 Gewichts-%.

Als aliphatische Polyisocyanate besonders bevorzugt sind Oligomere, Polymere und Derivate der abgeleitet von HDI oder IPDI, insbesondere HDI. Vorzugsweise weisen sie einen NCO-Gehalt von 16 bis 24 Gewichts-% auf, vorzugsweise 20 bis 24 Gewichts-%.

Es ist weiter vorteilhaft, wenn die Summe der NCO-Gruppen, welche nicht vom aliphatischen Polyisocyanat I herrühren, ≤20%, insbesondere ≤10%, insbesondere bevorzugt ≤5%, am meisten bevorzugt ≤1%, beträgt, bezogen auf die Summe aller NCO -Gruppen der Polyurethanzusammensetzung.

Vorzugsweise beträgt der Anteil des aliphatischen Polyisocyanats **I** ≥ 90 Gew.-%, insbesondere ≥ 95 Gew.-%, insbesondere bevorzugt ≥99 Gew.-%, bezogen auf das Gesamtgewicht der zweiten Komponente.

Vorzugsweise weist die Polyurethanzusammensetzung einen Anteil an aromatischen Polyisocyanaten von weniger als 5 Gew.-%, weniger als 2 Gew.-%, weniger als 1 Gew.-%, weniger als 0.5 Gew.-%, weniger als 0.1 Gew.-% auf, bezogen auf das Gesamtgewicht der Polyurethanzusammensetzung. Aromatische Polyisocyanate sind dahingehend von Nachteil, dass dadurch die Topfzeit stark verkürzt wird und die ausgehärteten Polyurethanzusammensetzung zu Vergilbung neigen.

Vorzugsweise weist die Polyurethanzusammensetzung einen Anteil an Polyasparaginsäureestern von weniger als 15 Gew.-%, von weniger als 10 Gew.-%, von weniger als 5 Gew.-%, weniger als 2 Gew.-%, weniger als 1 Gew.-%, weniger als 0.5 Gew.-%, weniger als 0.1 Gew.-% auf, bezogen auf das Gesamtgewicht der Polyurethanzusammensetzung. Polyasparaginsäureester sind dahingehend von Nachteil, dass dadurch die Aushärtungsreaktion zu schnell verläuft, insbesondere bei hoher Luftfeuchtigkeit.

Vorzugsweise beträgt das Gewichtsverhältnis von Komponente (A): Komponente (B) 5: 1 bis 2: 1, bevorzugter 4: 1 bis 3: 1.

Vorzugsweise liegt das Molverhältnis zwischen freien NCO-Gruppen und NCO-reaktiven Gruppen, vorzugsweise OH-Gruppen, in der erfindungsgemäßen Zusammensetzung vor dem Mischen zwischen 0,8 - 1,2, vorzugsweise 0,9 - 1,1, insbesondere 0,95 - 1,05.

Die Polyurethanzusammensetzung enthält zusätzlich 5 Gew.-% bis 70 Gew.-% mindestens eines Füllstoffs **F,** bezogen auf das Gesamtgewicht der Polyurethanzusammensetzung. Der Füllstoff **F** kann sich in der ersten Komponente **A** oder in der zweiten Komponente **B** befinden, insbesondere befindet er sich der ersten Komponente **A.**

Vorzugsweise handelt es sich um Füllstoffe ausgewählt aus der Liste bestehend aus gemahlenen oder gefällten Calciumcarbonaten, welche gegebenenfalls mit Fettsäuren, insbesondere Stearaten, beschichtet sind, Baryte (Schwerspate), Quarzmehle, Quarzsande, Dolomite, Wollastonite, Kaoline, calcinierte Kaoline, Schichtsilikate wie Glimmer oder Talk, Zeolithe, Aluminiumhydroxide, Magnesiumhydroxide, Kieselsäuren inklusive hochdisperse Kieselsäuren aus Pyrolyseprozessen, Zemente, Gipse, Flugaschen, industriell hergestellte Russe, Graphit, Metall-Pulver, beispielsweise von Aluminium, Kupfer, Eisen, Silber oder Stahl, PVC-Pulver und Hohlkugeln.
Bevorzugt enthält die Polyurethanzusammensetzung mindestens einen Füllstoff **F** ausgewählt aus der Gruppe bestehend aus Calciumcarbonat, Russ, Quarzsande, Kaolin, Baryt, Talk, Quarzmehl, Dolomit, Wollastonit, Kaolin, calciniertes Kaolin und Glimmer (Mica).
Als Füllstoffe **F** besonders bevorzugt sind Füllstoffe ausgewählt aus der Liste bestehend aus gemahlenen Calciumcarbonaten, calcinierte Kaoline, Quarzsande oder Baryt.

Es ist kann von Vorteil sein, eine Mischung verschiedener Füllstoffe einzusetzen. Am meisten bevorzugt sind Kombinationen von gemahlenen Calciumcarbonaten oder calcinierten Kaolinen und Baryt.

Vorzugsweise beträgt die Teilchengrösse der Füllstoffe **F** 0,1 bis 50 µm, bevorzugter 1 bis 30 µm.

Vorzugsweise beträgt der Anteil an Füllstoffen **F** 10 - 55 Gew.-%, 15 - 50 Gew.-%, 20 - 50 Gew.-%, 25 - 45 Gew.-%, insbesondere 30 - 40 Gew.-%, bezogen auf das Gesamtgewicht der Polyurethanzusammensetzung.

Die Polyurethanzusammensetzung enthält zusätzlich mindestens einen Zinnkatalysator **K** für die Reaktion von Hydroxylgruppen und Isocyanatgruppen umfasst, der Thiokomplexe bilden kann.

In der Tabelle 6 ist ersichtlich, dass bei der Verwendung eines Bismut-katalysators auch bei einer Aushärtungszeit von 6 h noch kein soweit ausgehärteter Film vorhanden ist, dass eine Shore-A messbar wäre, sondern ein Film vorliegt, der an der Oberfläche noch flüssig und klebrig ist.

Vorzugsweise handelt es sich bei dem Zinnkatalysator **K** um eine Organozinn-Verbindung, insbesondere um eine Organozinn (IV)-Verbindung.

Insbesondere handelt es sich um einen Zinnkatalysator **K** ausgewählt aus der Liste bestehend aus Dibutylzinndiacetat, Dibutylzinndilaurat, Dibutylzinndichlorid, Dibutylzinndiacetylacetonat, Dimethylzinndilaurat, Dioctylzinndiacetat, Dioctylzinndilaurat, Dioctylzinndiacetylacetonat, Bis[(2-ethyl-1-oxohexyl)oxy]dioctylstannan, Bis(neodecanoyloxy)dioctylstannan, Bis(dodecylthio)dioctylstannan und Bis(dodecylthio)dimethylstannan.
Insbesondere handelt es sich um Dibutylzinndilaurat, Dioctylzinndiacetylacetonat, oder Bis(dodecylthio)dioctylstannan, besonders bevorzugt um Dibutylzinndilaurat.

Es kann vorteilhaft sein, wenn sich der Zinnkatalysator **K** nur in der ersten Komponente **A** befindet.

Besonders bevorzugt ist der Zinnkatalysator **K** nur in einer dritten Komponente **C,** bei welcher es sich nicht um die erste Komponente **A** oder die zweite Komponente **B** handelt, enthalten. Dies hat den Vorteil, dass dadurch eine bessere Lagerstabilität erreicht wird sowie Topfzeit und Aushärtungszeit flexibel den Aushärtungsbedingungen angepasst werden können.

Die Menge an Zinnkatalysator **K,** bezogen auf die gesamte Polyurethanzusammensetzung, liegt bevorzugt im Bereich von 0.04 bis 0.75 Gew.-%, bevorzugt 0.07 bis 0.3 Gew.-%, insbesondere 0.08 bis 0.6 Gew.-%, besonders bevorzugt 0.1 bis 0.25 Gew.-%, bezogen auf die gesamte Polyurethanzusammensetzung.

Vorzugsweise weist die Polyurethanzusammensetzung einen Anteil von weniger als 0.5 Gew.-%, weniger als 0.1 Gew.-%, weniger als 0.05 Gew.-%, weniger als 0.01 Gew.-%, weniger als 0.001 Gew.-%, bezogen auf das Gesamtgewicht der Polyurethanzusammensetzung, an Katalysatoren für die Reaktion von Hydroxylgruppen und Isocyanatgruppen auf, welche nicht vorgenannte Zinnkatalysatoren **K** sind. Insbesondere handelt es sich dabei um Metallkatalysatoren, insbesondere Bismut-, Zink- oder Zirkoniumverbindungen, was Komplexe und Salze dieser Metalle einschliesst, bevorzugt um Komplexverbindungen von Bismut (III) oder Zirkonium (IV), insbesondere mit Liganden ausgewählt aus Alkoholaten, Carboxylaten, 1,3-Diketonaten, Oxinat, 1,3-Ketoesteraten und 1,3-Ketoamidaten, oder tertiäre Aminogruppen enthaltende Verbindungen wie insbesondere 2,2'-Dimorpholinodiethylether (DMDEE).

Die Polyurethanzusammensetzung enthält zusätzlich mindestens eine Verbindung **T,** die mindestens eine Thiolgruppe aufweist. Als Thiolgruppe wird hier eine -SH Gruppe verstanden, die an einen organischen Rest, beispielsweise einen aliphatischen, cycloaliphatischen oder aromatischen Kohlenstoffrest, gebunden ist.

Bevorzugt sind Verbindungen mit 1 bis 6, insbesondere 2 bis 4, am meisten bevorzugt 2 oder 3 Thiolgruppen.

Geeignete Verbindungen **T** mit einer Thiolgruppe sind beispielsweise 3-Mercaptopropyltrimethoxysilan, 3-Mercaptopropyltriethoxysilan, 3-Mercapto-1,2-propandiol, 2-Mercaptotoluimidazol oder 2-Mercaptobenzothiazol.

Geeignete Verbindungen **T** mit mehr als einer Thiolgruppe sind vorzugsweise ausgewählt aus der Liste bestehend aus Ethylenglykol-di(3-mercaptopropionat), Ethylenglykol-dimercaptoacetat, Dipentaerythritol-hexa(3-mercaptopropionat), Trimethylolpropan tris(3-mercaptopropionat), 2,3-Dimercapto-1,3,4-thiadiazol, Pentaerythritol-tetrakis(3-mercaptopropionat) und 3,6-Dioxa-1,8-octandithiol.

Bevorzugt ist die Verbindung **T** ausgewählt aus der Gruppe bestehend aus Ethylenglykol-di(3-mercaptopropionat), Ethylenglykol-dimercaptoacetat und Dipentaerythritol-hexa(3-mercaptopropionat), am meisten bevorzugt Ethylenglykol-di(3-mercaptopropionat).

In der Tabelle 7 ist ersichtlich, dass bei der Verwendung von 2-, 3- sowie 4-funktionellen Verbindungen **T** bei vergleichbaren molaren Verhältnissen (**T/K**) sehr ähnliche Topfzeiten erhalten werden.

Die Menge an Verbindung **T,** bezogen auf die gesamte Polyurethanzusammensetzung, liegt bevorzugt im Bereich von 0.075 bis 0.9 Gew.-%, bevorzugt 0.11 bis 0.75 Gew.-%, bevorzugt 0.11 bis 0.6 Gew.-%, bevorzugt 0.11 bis 0.45 Gew.-%, bevorzugt 0.11 bis 0.35 Gew.-%, insbesondere 0.15 bis 0.3 Gew.-%, bezogen auf die gesamte Polyurethanzusammensetzung.

Gegebenenfalls als Liganden des Zinnkatalysator K vorhandene Verbindungen, die mindestens eine Thiolgruppe aufweisen, wie beispielsweise Dodecylthiol in Bis(dodecylthio)dioctylstannan, werden zu der Gesamtmenge an Verbindung T in der Polyurethanzusammensetzung gezählt.

Bevorzugt ist die Verbindung **T** nur in einer dritten Komponente **C** enthalten. Vorzugsweise handelt es sich bei der dritten Komponente **C** um die vorgenannte Komponente **C** enthaltend den erwähnten Zinnkatalysator **K.**
Dies hat den Vorteil, dass dadurch eine bessere Lagerstabilität erreicht wird sowie Topfzeit und Aushärtungszeit flexibel den Aushärtungsbedingungen angepasst werden können.

Am meisten bevorzugt sind die Verbindung **T** und der Zinnkatalysator **K** nur in einer dritten Komponente **C** enthalten.

Das molare Verhältnis aller Thiolgruppen der mindestens einen Verbindung **T** zu allen Metallatomen des mindestens einen Zinnkatalysators **K** (**T/K**) liegt von 2.2:1 bis 40:1.

Vorzugsweise beträgt das molare Verhältnis (**T/K**) 2.5:1 bis 30:1, insbesondere 3:1 bis 20:1, 3:1 bis 18:1, 3:1 bis 16:1, 3:1 bis 15:1, 3:1 bis 12:1, 4:1 bis 10:1, am meisten bevorzugt 5:1 bis 9:1.

Dies ist dahingehend von Vorteil, dass dadurch Polyurethanzusammensetzung erhalten werden, die sowohl eine lange Topfzeit wie auch eine kurze Aushärtungszeit aufweisen, besonders bei Aushärtungsbedingungen mit einem Temperaturbereich von 8 °C bis 35 °C bei 50 % relativer Luftfeuchtigkeit, insbesondere von 12°C bis 23°C bei 50% relativer Luftfeuchtigkeit. Dies ist beispielsweise in den Tabellen 3-5 ersichtlich, dort werden Topfzeiten von 30 - 50 min mit Aushärtungszeiten von 1.5 - 3.0 h erhalten.

Ein molares Verhältnis von grösser als 40:1 ist dahingehend von Nachteil, dass dadurch Polyurethanzusammensetzung erhalten werden, die insbesondere bei einer Aushärtung bei 23°C und 50% relativer Luftfeuchtigkeit Aushärtungszeiten von mehr als 6 Stunden aufweisen, lange zu klebrigen Oberflächen neigen und ein ungleichmässiges Durchhärtungsverhalten durch die applizierte Schicht zeigen. Dies ist beispielsweise in Tabelle 4 aufgrund der Zusammensetzung E11 ersichtlich.

Ein molares Verhältnis von kleiner als 2.2:1 ist dahingehend von Nachteil, dass dadurch Polyurethanzusammensetzung erhalten werden, die eine zu kurze Topfzeit aufsweisen. Dies ist beispielsweise in Tabelle 4 aufgrund der Zusammensetzung E12 ersichtlich.

Das molare Verhältnis aller NCO-Gruppen der Polyurethanzusammensetzung zu allen Metallatomen des mindestens einen Zinnkatalysators **K** (**NCO/K**) liegt von 50 bis 1500.

Insbesondere beträgt das molare Verhältnis (**NCO/K**) 100 bis 1300, vorzugsweise 125 bis 1200, 200 bis 1150, 250 bis 1000, 300 bis 800, am meisten bevorzugt 400 bis 700.

Dies ist dahingehend von Vorteil, dass dadurch Polyurethanzusammensetzungen erhalten werden, die sowohl eine lange Topfzeit wie auch eine kurze Aushärtungszeit aufweisen, besonders bei Aushärtungsbedingungen mit einem Temperaturbereich von 8 °C bis 35 °C bei 50 % relativer Luftfeuchtigkeit, insbesondere von 12°C bis 23°C bei 50% relativer Luftfeuchtigkeit. Dies ist beispielsweise in den Tabellen 3-5 ersichtlich, dort werden Topfzeiten von 30 - 50 min mit Aushärtungszeiten von 1.5 - 3.0 h erhalten.

Eine bevorzugte Kombination (**T/K**) mit (**NCO/K**) ist
(**T/K**): 2.5-20, insbesondere 2.5-15, 2.5-10, 2.5-8, 3-7, 3.5-6, 3.5-5, bevorzugt 3.5-4.5.
(**NCO/K**): 100-800, 125-700, 150-600, 200-500, insbesondere 250-400

Eine solche Polyurethanzusammensetzung ist dahingehend von Vorteil, dass bei **12**°C / 50% relativer Luftfeuchtigkeit lange Topfzeiten und kurze Aushärtungszeiten erhalten werden.

Eine weitere bevorzugte Kombination (**T/K**) mit (**NCO/K**) ist
(**T/K**): 2.5-25, insbesondere 3-20, 3-15, 3-12, 3-10, 3.5-8, 4-7, 4.5-6, bevorzugt 5-6.
(**NCO/K**):200-800, 300-700, 350-600, 400-550, insbesondere 450-550
Eine solche Polyurethanzusammensetzung ist dahingehend von Vorteil, dass bei **18**°C / 50% relativer Luftfeuchtigkeit lange Topfzeiten und kurze Aushärtungszeiten erhalten werden.

Weiter bevorzugt ist eine Kombination (**T/K**) mit (**NCO/K**) von
(**T/K**): 3-30, insbesondere 4-25, 4-20, 5-15, 6-12, 7-12, bevorzugt 7-10.
(**NCO/K**):200-1200, 300-1000, 400-800, 500-700, insbesondere 550-650
Eine solche Polyurethanzusammensetzung ist dahingehend von Vorteil, dass bei **23**°C / 50% relativer Luftfeuchtigkeit lange Topfzeiten und kurze Aushärtungszeiten erhalten werden.

Weiter bevorzugt ist eine Kombination (**T/K**) mit (**NCO/K**) von
(**T/K**): 10-40, insbesondere 10-30, 12-25, 12-20, 12-18, 14-18, bevorzugt 15-17.
(**NCO/K**):500-1500, 800-1300, 1000-1300, 1100-1300, insbesondere 1150-1250 Eine solche Polyurethanzusammensetzung ist dahingehend von Vorteil, dass bei **35**°C / 50% relativer Luftfeuchtigkeit lange Topfzeiten und kurze Aushärtungszeiten erhalten werden.

Vorzugsweise weist die Polyurethanzusammensetzung einen Anteil an organischen Lösungsmitteln, insbesondere organischen Lösungsmitteln mit einem Siedepunkt bei 23°C von weniger als 200°C, von weniger als 5 Gew.-%, weniger als 2 Gew.-%, weniger als 1 Gew.-%, weniger als 0.5 Gew.-%, weniger als 0.1 Gew.-% auf, bezogen auf das Gesamtgewicht der Polyurethanzusammensetzung.
Bei den genannten organischen Lösungsmitteln handelt es sich insbesondere um organische Lösungsmittel ausgewählt aus der Liste bestehend aus Aceton, Methylethylketon, Methyl-n-propylketon, Diisobutylketon, Methylisobutylketon, Methyl-n-amylketon, Methylisoamylketon, Acetylaceton, Mesityloxid, Cyclohexanon, Methylcyclohexanon, Ethylacetat, Propylacetat, Butylacetat, n-Butylpropionat, Diethylmalonat, 1-Methoxy-2-propylacetat, Ethyl-3-ethoxypropionat, Diisopropylether, Diethylether, Dibutylether, Diethylenglykoldiethylether, Ethylenglykoldiethylether, Ethylenglykolmonopropylether, Ethylenglykolmono-2-ethylhexylether, Acetale wie insbesondere Methylal, Ethylal, Propylal, Butylal, 2-Ethylhexylal, Dioxolan, Glycerolformal oder 2,5,7,10-Tetraoxaundecan (TOU), Toluol, Xylol, Heptan, Octan, Naphtha, White Spirit, Petrolether oder Benzin, Methylenchlorid, Propylencarbonat, Butyrolacton, N-Methylpyrrolidon und N-Ethylpyrrolidon.

Vorzugsweise weist die Polyurethanzusammensetzung weiter einen Anteil an Weichmacher von 1 - 10 Gew.-%, 2 - 8 Gew.-%, 3 - 6 Gew.-%, insbesondere 3 - 5 Gew.-%, auf, bezogen auf das Gesamtgewicht der Polyurethanzusammensetzung. Solche Weichmacher sind insbesondere ausgewählt aus der Liste bestehend aus Carbonsäureester wie Phthalate, insbesondere Diisononylphthalat (DINP), Diisodecylphthalat (DIDP) oder Di(2-propylheptyl)phthalat (DPHP), hydrierte Phthalate, insbesondere hydriertes Diisononylphthalat bzw. Diisononylcyclohexan-1,2-dicarboxylat (DINCH), Terephthalate, insbesondere Dioctylterephthalat, Trimellitate, Adipate, insbesondere Dioctyladipat, Azelate, Sebacate, Benzoate, Glykolether, Glykolester, organische Phosphor- oder Sulfonsäureester, Polybutene und Polyisobutene.

Weiter kann es vorteilhaft sein, wenn die die Polyurethanzusammensetzung einen Anteil an vorgenannten Weichmachern von weniger als 5 Gew.-%, von weniger als 2 Gew.-%, weniger als 1 Gew.-%, weniger als 0.5 Gew.-%, weniger als 0.1 Gew.-% aufweist, bezogen auf das Gesamtgewicht der Polyurethanzusammensetzung.

Die Zusammensetzung kann weitere für Polyurethanzusammensetzungen gebräuchliche Zusätze enthalten. Insbesondere können die folgenden Hilfs- und Zusatzstoffe vorhanden sein:
- anorganische oder organische Pigmente, insbesondere Titandioxid, Chromoxide oder Eisenoxide;
- Fasern;
- Haftvermittler;
- Rheologie-Modifizierer;
- flammhemmende Substanzen;
- Additive, insbesondere Netzmittel, Verlaufmittel, Entschäumer, Entlüfter, Stabilisatoren gegen Oxidation, Wärme, Licht oder UV-Strahlung oder Biozide; oder weitere üblicherweise in solchen Zusammensetzungen eingesetzte Substanzen.

Die Polyurethanzusammensetzung enthält bevorzugt weniger als 0.5 Gew.-%, insbesondere weniger als 0.1 Gew.-%, bezogen auf die gesamte Zusammensetzung, an Carbonsäuren. Allenfalls durch den Metallkatalysator eingebrachte Carboxylatliganden zählen hierbei nicht zu den gemeinten Carbonsäuren. Auch gegebenenfalls in dem Polyol **P1** vorhandene Verbindungen mit Carbonsäuregruppen zählen hierbei nicht zu den gemeinten Carbonsäuren.

Die Polyurethanzusammensetzung enthält bevorzugt weniger als 0.5 Gew.-%, insbesondere weniger als 0.1 Gew.-%, weniger als 0.01 Gew.-%, besonders bevorzugt weniger als 0.001 Gew.-%, bezogen auf die gesamte Zusammensetzung, an einer tertiäre Säure der Formel RR'R"CCOOH, wobei jede R-, R'- und R"-Gruppe unabhängig eine Alkyl-, Alkenyl-, Aryl- oder Aralkylgruppe ist, die mindestens ein Kohlenstoffatom enthält, mit der Vorraussetzung, dass zwei oder drei der R-, R'- und R"-Gruppen verbunden werden können, um eine Ringstruktur zu bilden, und wobei die R-, R'- und / oder R"-Gruppen substituiert sein können und wobei die Gesamtzahl der Kohlenstoffatome in der R-, R'- und R"-Gruppen im Bereich von 3 bis 40 liegt.

Eine bevorzugte Polyurethanzusammensetzung umfasst eine erste Komponente A und eine zweite Komponente B, wobei
- die erste Komponente **A**
   - eine Polyolmischung **P** aufweist, enthaltend
      - mindestens ein Polyol **P1** mit einem durchschnittlichen Molekulargewicht von 800 bis 30'000 g / mol, vorzugsweise 850 bis 20'000 g / mol, bevorzugter 900 bis 10'000 g / mol, wobei das Polyol **P1** Rizinusöl oder eine chemische Modifikation davon ist, insbesondere eine chemische Modifikation von Rizinusöl, besonders bevorzugt ein Reaktionsprodukt von Rizinusöl mit Ketonharzen, vorzugsweise handelt es sich um ein Polyol mit einer OH-Zahl von 110 bis 200 mg KOH/g, 140 bis 190 mg KOH/g, insbesondere 140 bis 170 mg KOH/g, insbesondere bevorzugt 150 bis 170 mg KOH/g; und

      - vorzugsweise mindestens ein Polyol **P2** ausgewählt aus der Gruppe bestehend aus Polyesterpolyolen und Polyetherpolyolen, bevorzugt Polyetherpolyole, insbesondere bevorzugt Polyoxyethylenpolyole, Polyoxypropylenpolyole und Polyoxypropylenpolyoxyethylenpolyole, insbesondere Polyole mit einem mittleren Molekulargewicht im Bereich von 400 bis 6'000 g/mol, insbesondere 450 bis 5'500 g/mol, besonders bevorzugt 500 bis 5'000 g/mol, 750 bis 3'000 g/mol, am meisten bevorzugt 1000 bis 2'000 g/mol, vorzugsweise Polyole mit einer mittleren OH-Funktionalität im Bereich von 2 bis 4, insbesondere 2 bis 3.5, besonders bevorzugt 2 bis 3;
      - wobei vorzugsweise das Gewichtsverhältnis des Polyols **P1** zum Polyol **P2** ((**P1**) / (**P2**)) von 1,25 bis 2,5, vorzugsweise 1,5 bis 2,25, am meisten bevorzugt 1,75 bis 2,0, beträgt; und
- die zweite Komponente **B**
   - mindestens ein aliphatisches Polyisocyanat **I** umfasst, insbesondere Oligomere, Polymere und Derivate der abgeleitet von HDI oder IPDI, insbesondere HDI, insbesondere mit einem NCO-Gehalt von 16 bis 24 Gewichts-% auf, vorzugsweise 20 bis 24 Gewichts-%.

Die bevorzugte Polyurethanzusammensetzung umfasst weiter:
- 5 Gew.-% bis 70 Gew.-%, 10 - 55 Gew.-%, 15 - 50 Gew.-%, 20 - 50 Gew.-%, 25 - 45 Gew.-%, insbesondere 30 - 40 Gew.-%, mindestens eines Füllstoffs **F,** bezogen auf das Gesamtgewicht der Polyurethanzusammensetzung, insbesondere ausgewählt aus der Gruppe bestehend aus Calciumcarbonat, Russ, Quarzsande, Kaolin, Baryt, Talk, Quarzmehl, Dolomit, Wollastonit, Kaolin, calciniertes Kaolin und Glimmer (Mica); und
- mindestens einen Zinnkatalysator **K** für die Reaktion von Hydroxylgruppen und Isocyanatgruppen umfasst, der Thiokomplexe bilden kann, insbesondere eine Organozinn-Verbindung, insbesondere um eine Organozinn (IV)-Verbindung; und
- mindestens eine Verbindung **T,** die mindestens eine Thiolgruppe, insbesondere 2 bis 4, am meisten bevorzugt 2 oder 3 Thiolgruppen aufweist, insbesondere ausgewählt aus der Liste bestehend aus Ethylenglykol-di(3-mercaptopropionat), Ethylenglykol-dimercaptoacetat, Dipentaerythritol-hexa(3-mercaptopropionat), Trimethylolpropan tris(3-mercaptopropionat), 2,3-Dimercapto-1,3,4-thiadiazol, Pentaerythritol-tetrakis(3-mercaptopropionat) und 3,6-Dioxa-1,8-octandithiol; und

- das molare Verhältnis aller Thiolgruppen der mindestens einen Verbindung **T** zu allen Metallatomen des mindestens einen Zinnkatalysators **K** (**T/K**) von 2.2:1 bis 40:1, insbesondere 3:1 bis 20:1, 3:1 bis 18:1, 3:1 bis 16:1, 3:1 bis 15:1, 3:1 bis 12:1, 4:1 bis 10:1, am meisten bevorzugt 5:1 bis 9:1 liegt; und
- das molare Verhältnis aller NCO-Gruppen der Polyurethanzusammensetzung zu allen Metallatomen des mindestens einen Zinnkatalysators **K (NCO/K)** von 50 bis 1500, 100 bis 1300, vorzugsweise 125 bis 1200, 200 bis 1150, 250 bis 1000, 300 bis 800, am meisten bevorzugt 400 bis 700 liegt.

Vorzugsweise liegt das Molverhältnis zwischen freien NCO-Gruppen und NCO-reaktiven Gruppen, vorzugsweise OH-Gruppen, in der bevorzugten Zusammensetzung vor dem Mischen zwischen 0,8 - 1,2, vorzugsweise 0,9 - 1,1, insbesondere 0,95 - 1,05.

Vorzugsweise weist die bevorzugte Polyurethanzusammensetzung einen Anteil an organischen Lösungsmitteln, insbesondere organischen Lösungsmitteln mit einem Siedepunkt bei 23°C von weniger als 200°C, von weniger als 5 Gew.-%, weniger als 2 Gew.-%, weniger als 1 Gew.-%, weniger als 0.5 Gew.-%, weniger als 0.1 Gew.-% auf.

Vorzugsweise beträgt in der bevorzugten Polyurethanzusammensetzung die Gesamtmenge der Summe des Polyols **P1** und des Polyols **P2** mehr als 75 Gew .-%, vorzugsweise als 80 Gew .-%, als 90 Gew .-%, als 95 Gew .-%, insbesondere als 98 Gew .-%, der Polyolmischung **P.**

Vorzugsweise weist die Polyolmischung **P** mehr als 80 Gew .-%, mehr als 90 Gew .-%, mehr als 95 Gew .-%, insbesondere mehr als 98 Gew .-%, der Gesamtmenge der NCO-reaktiven Gruppen der bevorzugten Polyurethanzusammensetzung auf.

Vorzugsweise beträgt in der bevorzugten Polyurethanzusammensetzung der Anteil des aliphatischen Polyisocyanats **I** ≥ 90 Gew.-%, insbesondere ≥ 95 Gew.-%, insbesondere bevorzugt ≥99 Gew.-%, bezogen auf das Gesamtgewicht der zweiten Komponente.

Besonders bevorzugt ist in der bevorzugten Polyurethanzusammensetzung der Zinnkatalysator **K** nur in einer dritten Komponente **C,** bei welcher es sich nicht um die erste Komponente **A** oder die zweite Komponente **B** handelt, enthalten.

Die Herstellung der beiden Komponenten **A** und **B** erfolgt getrennt voneinander und vorzugsweise unter Ausschluss von Feuchtigkeit. Beide Komponenten werden typischerweise jeweils in einem eigenen Gebinde gelagert. Die weiteren Bestandteile der Polyurethanzusammensetzung können als Bestandteil der ersten oder der zweiten Komponente vorhanden sein, wobei gegenüber Isocyanatgruppen reaktive weitere Bestandteile bevorzugt ein Bestandteil der ersten Komponente sind. Ein geeignetes Gebinde zum Lagern der jeweiligen Komponente ist insbesondere ein Fass, ein Hobbock, ein Beutel, ein Eimer, eine Büchse, eine Kartusche oder eine Tube. Die Komponenten sind beide lagerstabil, das heisst, dass sie vor ihrer Anwendung während mehreren Monaten bis zu einem Jahr und länger aufbewahrt werden können, ohne dass sie sich in ihren jeweiligen Eigenschaften in einem für ihren Gebrauch relevanten Ausmass verändern.

Die beiden Komponenten werden vor dem Vermischen der Zusammensetzung getrennt voneinander gelagert und erst bei oder unmittelbar vor der Anwendung miteinander vermischt. Sie sind vorteilhaft in einer Verpackung, welche aus zwei voneinander getrennten Kammern besteht, vorhanden.

In einem weiteren Aspekt umfasst die Erfindung eine Packung enthaltend die erfindungsgemässe Polyurethanzusammensetzung, bestehend aus einer Verpackung mit mindestens zwei, insbesondere mindestens drei, vorzugsweise drei oder vier, am meisten bevorzugt drei, voneinander getrennten Kammern, welche jeweils die erste Komponente **A,** beziehungsweise die zweite Komponente **B,** respektive vorzugsweise die vorgehend erwähnte dritte Komponente **C,** der Polyurethanzusammensetzung enthält.
Besonders bevorzugt ist eine Packung bestehend aus einer Verpackung bestehend aus der vorgehend beschriebenen ersten Komponente **A,** der zweiten Komponente **B,** sowie der dritten Komponente **C.**
Die dritte Komponente **C** enthält insbesondere den vorgehend erwähnten Zinnkatalysator **K** und die vorgehend erwähnte Verbindung **T.** Vorzugsweise befinden sich der Zinnkatalysator **K** und die Verbindung **T** ausschliesslich in der dritten Komponente **C.**

Das Mischen erfolgt typischerweise mit Hilfe von einem Handrührwerk. Beim Mischen ist darauf zu achten, dass die erste Komponente **A** und die zweite Komponente **B** möglichst homogen vermischt werden. Werden die zwei Komponenten unvollständig gemischt, treten lokale Abweichungen vom vorteilhaften Mischungsverhältnis auf, was sich in einer Verschlechterung der mechanischen Eigenschaften auswirken kann.

Beim Kontakt der ersten Komponente **A** mit der zweiten Komponente **B** beginnt die Aushärtung durch chemische Reaktion. Dabei reagieren die Hydroxylgruppen und gegebenenfalls vorhandene weitere gegenüber Isocyanatgruppen reaktive Substanzen mit den Isocyanatgruppen. Überschüssige Isocyanatgruppen reagieren vorwiegend mit Feuchtigkeit. Als Resultat dieser Reaktionen härtet die Polyurethanzusammensetzung zu einem festen Material aus. Dieser Vorgang wird auch als Vernetzung bezeichnet.
Ein weiterer Gegenstand der Erfindung ist somit auch eine ausgehärtete Polyurethanzusammensetzung, erhalten aus der Aushärtung der Polyurethanzusammensetzung wie im vorliegenden Dokument beschrieben.

Die Erfindung betrifft somit auch ein Verfahren zur Herstellung eines Bodenbelags unter Verwendung der erfindungsgemässen Polyurethanzusammensetzung , wobei das Verfahren umfasst:
a) Mischen der ersten Komponente **(A)** und der zweiten Komponente **(B),** sowie des mindestens einen Füllstoffs **F,** des mindestens einen Zinnkatalysators **K** sowie der mindestens einen Verbindung **T;**
b) Aufbringen des gemischten Materials auf ein Substrat,
c) gegebenenfalls Glätten des aufgetragenen Mischmaterials und
d) Härten des aufgetragenen Mischmaterials, um einen Bodenbelag zu erhalten.

Bei den in Schritt a) beschriebenen ersten Komponente **(A),** zweiten Komponente **(B),** Füllstoff **F,** Zinnkatalysators **K** und Verbindung **T** handelt es sich vorzugsweise um die vorgehend als bevorzugt ausgewiesenen Ausführungsformen ebensolcher. Besonders bevorzugt entsteht in Schritt a) eine Mischung der erfindungsgemässen Polyurethanzusammensetzung, insbesondere einer vorgehend als besonders bevorzugt ausgewiesenen Polyurethanzusammensetzung.

Vorzugsweise erfolgen die Schritte a) - d) in eben dieser chronologischen Abfolge.

Es ist weiter vorteilhaft, wenn die Schritte a) - d) in dem nachfolgend beschriebenen Temperaturbereich mit folgendem molaren Verhältnis aller Thiolgruppen der mindestens einen Verbindung **T** zu allen Metallatomen des mindestens einen Zinnkatalysators **K** (**T/K**) ausgeführt werden:
1) 28 bis 37.5°C, molares Verhältnis (**T/K**) = 10-40, insbesondere 10-30, 12-25, 12-20, 12-18, 14-18, bevorzugt 15-17; und/oder
2) 20 bis 28°C, molares Verhältnis (**T/K**) = 3-30, insbesondere 4-25, 4-20, 5-15, 6-12, 7-12, bevorzugt 7-10; und/oder
3) 15 bis 20°C, molares Verhältnis (**T/K**) = 2.5-25, insbesondere 3-20, 3-15, 3-12, 3-10, 3.5-8, 4-7, 4.5-6, bevorzugt 5-6; und/oder
4) 8 bis 15°C, molares Verhältnis (**T/K**) = 2.5-20, insbesondere 2.5-15, 2.5-10, 2.5-8, 3-7, 3.5-6, 3.5-5, bevorzugt 3.5-4.5.

Besonders bevorzugt beträgt zusätzlich das molare Verhältnis aller NCO-Gruppen der Polyurethanzusammensetzung zu allen Metallatomen des mindestens einen Zinnkatalysators **K** (**NCO/K**) bei den vorgenannten Nummer 1)-4):
1) (**NCO/K**):500-1500, 800-1300, 1000-1300, 1100-1300, insbesondere 1150-1250,
2) (**NCO/K**):200-1200, 300-1000, 400-800, 500-700, insbesondere 550-650,
3) (**NCO/K**):200-800, 300-700, 350-600, 400-550, insbesondere 450-550,
4) (**NCO/K**): 100-800, 125-700, 150-600, 200-500, insbesondere 250-400.

Vorzugsweise wird in Schritt a) eine vorgehend beschriebene Packung bestehend aus einer Verpackung bestehend aus der vorgehend beschriebenen ersten Komponente **A,** der zweiten Komponente **B** sowie gegebenenfalls der dritten Komponente **C** verwendet. Besonders bevorzugt wird dabei mindestens eines, vorzugsweise beide der vorgehend in 1) - 4) beschriebenen molaren Verhältnisse (**T/K**) und/oder (**NCO/K**) entsprechend der vorherrschenden Temperatur eingestellt.

In einer bevorzugten Ausführungsform wird das Verfahren verwendet, um einen Sportboden, Schul-und Krankenhausboden, Gewerbeboden, Boden im Marinebereich oder einen Industrieboden herzustellen.

Bevorzugte Substrate, auf die die Polyurethanzusammensetzung aufgebracht werden kann, sind ausgewählt aus der Liste bestehend aus Estrichböden, Betonböden und Zementböden.

Vorzugsweise ist das Substrat ein vorhandener Boden, vorzugsweise ein Boden vorbehandelt mit einer Polyurethangrundierung oder einer Epoxidharzgrundierung. Vorzugsweise hat diese Grundierung eine Dicke von 0.1 - 1 mm, insbesondere 0.3 - 0.7 mm.

Das Aufbringen der Polyurethanzusammensetzung kann durch jedes übliche Verfahren erfolgen, insbesondere Beschichten, Gießen, Vergießen, Spachteln. Der erhaltene Boden hat vorzugsweise eine Dicke von 0.1 - 10 mm, 0.5 - 10 mm, insbesondere 1 - 8 mm, 1.5 - 6 mm, 1.5 - 4 mm, besonders bevorzugt 1.5 - 3 mm. Die Anwendungstemperatur für die Polyurethanzusammensetzung beträgt vorzugsweise 0 bis 40°C, 8 bis 40°C, vorzugsweise 12 bis 35°C, besonders bevorzugt 15 bis 30°C, am meisten bevorzugt 18 bis 23°C.

Die Erfindung betrifft auch den Bodenbelag, vorzugsweise einen Sportboden, Schul-und Krankenhausboden, Gewerbeboden, Boden im Marinebereich oder einen Industrieboden, der durch das erfindungsgemäße Verfahren erhältlich ist. Die Erfindung betrifft auch die Verwendung der Polyurethanzusammensetzung als Bodenbelag für Sport-, Schul-, Krankenhaus-, Gewerbe-, Marine- oder Industrieböden, am meisten bevorzugt Sport-, Schul-, Krankenhaus- und Gewerbeböden .

Die Erfindung betrifft weiter die Verwendung der erfindungsgemässen Polyurethanzusammensetzung zur Herstellung von vorgehend beschriebenen Bodenbelägen.

Vorzugsweise hat die Polyurethanzusammensetzung die folgenden Eigenschaften:
- Topfzeit, insbesondere gemessen wie im experimentellen Teil beschreiben: >10 min - <5 h, insbesondere 25 - 80 min, 30 - 60 min, insbesondere 35 - 45 min;
- Aushärtungszeit, insbesondere gemessen wie im experimentellen Teil beschreiben: 3.5 - 1.25 h, 3 - 1.5 h, insbesondere 2.75 - 1.75 h.

### Beispiele

### Verwendete Substanzen:

**Tabelle 1: Verwendete Substanzen.**

| | |
|---|---|
| P1 | Reaktionsprodukt von Rizinusöl mit Ketonharz, OH-Zahl von 150-190 mg KOH/g |
| P2 | Polyoxypropylentriol, Hydroxylzahl: 350 - 600 mg KOH/g |
| Molekularsieb | Sylosiv^{®} A3 |
| Talk | Talk (Füllstoff) |
| Kreide | Omyacarb^{®} 5 GU (Omya); gemahlene natürliche Kreide (Füllstoff) |
| Schwerspat | Schwerspatmehl (Füllstoff) |
| Weichmacher | langkettiges Paraffin |
| HDI | HDI-Trimer mit 70% Trimer und geringeren Mengen höherer Oligomere, Gesamt-NCO-Funktionalität = 3,1, Äquivalentgewicht 183 g / mol, NCO-Gehalt 22,5 - 23,5 Gewichts-%, Desmodur N 3600 (Covestro) |
| GDMP | Thiocure^{®} 320 (Bruno Bock Thiochemicals); Glycol-di(3-mercaptopropionat), Molekulargewicht 238.3 g/mol, 2-funktional. |
| MWK3 | Thiocure^{®} 330 (Bruno Bock Thiochemicals); TRIMETHYLOLPROPANE TRIS(3-MERCAPTOPROPIONATE, Molekulargewicht 398.6 g/mol, 3-funktional. |
| MWG4 | Thiocure^{®} 341 (Bruno Bock Thiochemicals); Polycaprolacton bis 3-mecaptopropionat, Molekulargewicht 1350 g/mol, 4-funktional. |
| DBTL | Dibutylzinndilaurat |
| DOTL | Dioctylzinndilaurat |
| DABCO T120 | Dibutylbis(dodecylthio)stannan, Zinnkatalysator mit zwei 1-funktionalen Thio-Verbindungen, DABCO T120 |
| Fomrez UL 22 | Bis(dodecylthio)dimethylstannan, Fomrez UL 22 |
| Fomrez UL 32 | Bis(dodecylthio)dioctylstannan, Fomrez UL 32 |
| TIB Kat 318 | Dioctylzinndineodecanoat, TIB Kat 318 |
| TIB Kat 320 | Bis[(2-ethyl-1-oxohexyl)oxy]dioctylstannan, TIB Kat 320 |
| Coscat 83 | 35 Gew.-% Coscat 83 (Organobismut-Katalysator; Coscat^{®} 83 (Vertellus Specialties Inc.)) in Weichmacher mit 1 Moläquivalent 8-Hydroxychinolin (bezogen auf Bi) (2.68 mmol Bi/g) |

**Tabelle 2: Verwendete Polyurethanzusammensetzung.**

| Komponente (A) | Gewicht-% bezogen auf das Gewicht der Komponente (A) |
|---|---|
| P1 | 33.5 |
| P2 | 13 |
| Weichmacher | 5 |
| Talk (Füllstoff) | 5 |
| Kreide (Füllstoff) | 29.5 |
| Schwerspat (Füllstoff) | 9 |
| Molekularsieb | 5 |
| Summe | 100 |
| | |
| Komponente (B) | Gewicht-% bezogen auf das Gewicht der Komponente (B) |
| HDI | 100 |
| Summe | 100 |

### Herstellung von Polyurethanzusammensetzungen und Messmethoden

Für jede Zusammensetzung wurden die in den Tabellen 3-8 angegebenen Inhaltsstoffe in den angegebenen Mengen (in Gewichtsteilen (Gew.-%)) der ersten Komponente **A** mittels eines Vakuumdissolvers unter Feuchtigkeitsausschluss zu einer homogenen Mischung verarbeitet und aufbewahrt. Ebenso wurden die in den Tabellen angegebenen Inhaltsstoffe der zweiten Komponente **B** verarbeitet und aufbewahrt. Die bei der Mischung der Komponenten zugegebene Art und Menge an Verbindung **T** und Zinnkatalysator **K,** respektive Bismuthkatalysator, sind in den Tabellen 3-8 aufgeführt. Das Molverhältnis zwischen freien NCO-Gruppen und NCO-reaktiven Gruppen betrug 1.0.

Zur Bestimmung der **Topfzeit** (TZ) wurde die Reaktionskurve bei Raumtemperaturhärtung bestimmt. Dazu wurden die Komponenten A und B bei den in den Tabellen 3-8 angegebenen Temperatur und relativer Feuchte temperiert. Die Komponenten werden ihrem Mischungsverhältnis entsprechend, gegebenenfalls unter Zugabe von Katalysator und Thiol-verbindung, mittels eines KPG-Rühres während 120 Sekunden bei 1000 U/min gemischt und anschliessend 75 ml davon in einen 100 ml Pappbecher überführt. Dieser Pappbecher wird nach aussen mit wärmedämmendem Material isoliert. 4 Minuten nach Mischstart beginnt die Zeitmessung und die Temperaturmessung erfolgt mithilfe eines Testo 176 T4 Temperaturmessgeräts mit NiCr-Ni-Thermoelementen, platziert mittig in der gemischten Zusammensetzung.

Nach dem Mischen der beiden Komponenten setzt die Vernetzungsreaktion ein. Dies zeigt sich durch das Ansteigen der Viskosität und Erhöhung der Temperatur. Die Topfzeit ist die Zeitdauer bis zum Erreichen der kritischen Temperatur bzw. eine signifikante Änderung des Temperaturanstiegs. Zur Bestimmung der Reaktivität wird die Geschwindigkeit gemessen, in welcher eine Probe ihre Höchsttemperatur Tₘₐₓ erreicht. Der Temperaturverlauf gestattet eine vergleichende Beurteilung von Reaktionsharzmassen hinsichtlich ihrer Reaktivität.

Aus der Temperaturkurve kann die maximal erreichte Temperatur (Tmax), die Zeitdauer bis zum Erreichen von T=40°C abgelesen werden. Die Topfzeit wird aus dem aufgenommenen Temperatur-Zeit-Diagramm grafisch ermittelt. Die Messwerte werden als Lot der Tangentenschnittpunkte der ersten Steigungs-änderung der Temperatur-Zeit-Kurve zur Zeitachse bestimmt. Die Lage des Schnittpunkts auf der Zeitachse ergibt die Topfzeit in Minuten.

Die Zeitdauer bis zum Erreichen von T=40°C (TZ 40°C) ist in den Tabellen 3-6 und 8 ersichtlich.

Für die Versuche der unterschiedlich funktionellen Schwefelverbindungen in Tabelle 7 und für die Zusammensetzungen E24 - E27 in Tabelle 8 wurde dasselbe Verfahren jedoch bis zum Erreichen von T=50°C (TZ 50°C) verwendet. Dabei kam anstelle eine KPG-Rühres ein SpeedMixer (DAC 150 FV, Hauschild) für 120 Sekunden bei 2400 U/min zum Einsatz.
Der Zusammensetzung von Tabelle 2 wurden den Versuchen in Tabelle 7 DABCO T120 als Katalysator zugegeben. Zusätzlich zu den in DABCO T120 enthaltenen 1-funktionalen Thiol-Verbindungen wurden die aufgeführten Verbindungen T (GDMP, MWK3, respektive MWG4) in solchen Mengen zugegeben, dass das in Tabelle 7 ausgewiesene molare Verhältnis (**T/K**) erhalten wurde.
Bei den Zusammensetzungen in der Tabelle 8 wurde als Verbindung **T** GDMP und als Zinnkatalysator **K** die in Tabelle 8 ausgewiesenen Zinn-Katalysatoren verwendet.

Zur Bestimmung der **Aushärtungsgeschwindigkeit** wurde die Shore A-Härte (Shore A) von einem 2 mm Film auf hartem Untergrund bestimmt. Diese Härteprüfung dient zur Abschätzung, wann der Härtegrad nur noch geringfügig oder nicht weiter steigt. Es wurden Shore A-Härtemessungen nach 1,5 h, 2 h, 3 h, 4 h, 5 h, 6 h und nach 24 h vorgenommen, bei Erreichen von einem Wert höher als 75 wurde ein Film als ausreichend ausgehärtet beurteilt.

Die Komponenten A und B wurden bei den in den Tabellen 3-6 und 8 angegebenen Temperatur und relativer Feuchte (LF) temperiert. Die Komponenten werden ihrem Mischungsverhältnis entsprechend, gegebenenfalls unter Zugabe von Katalysator und Thiol-verbindung, mittels eines SpeedMixers^{®} (DAC 150 FV, Hauschild) während 120 Sekunden bei 2400 U/min gemischt. Im Augenblick des Mischstarts beginnt die Zeitmessung. Ungefähr 11 g der gemischten Zusammensetzung wurden in eine runde Probenform aus Plastik mit einem Durchmesser von 7,3 cm gefüllt, um eine Dicke von 2 mm zu erreichen. Diese wurde dann auf eine Stahlplatte als Substrat gelegt. Nach den angegebenen Zeitpunkten wurden die Shore A-Härtemessungen gemäss DIN EN ISO 868 (Version Oktober 2003) vorgenommen mit der Ausnahme, dass eine Schichtdicke von 2 mm verwendet wurde.

Die Resultate der Messungen sind in den Tabellen 3-6 angegeben.
Dabei sind erfindungsgemässe Zusammensetzungen mit "E" gekennzeichnet (E1 bis E28) und nicht erfindungsgemässe Referenzzusammensetzungen mit "Ref." gekennzeichnet (Ref.1 bis Ref.4).

Tabelle 8 zeigt Messungen von Aushärtungsgeschwindigkeiten und Topfzeiten von verschiedenen Organozinn (IV)-Verbindungen.

**Tabelle 3**

| | | E1 | E2 | E3 | E4 | E5 | E6 | E7 | E8 |
|---|---|---|---|---|---|---|---|---|---|
| Temperatur/LF | | 12°C/50% | 12°C/50% | 12°C/50% | 12°C/50% | 18°C/50% | 18°C/50% | 18°C/50% | 18°C/50% |
| Anteil DBTL [g/100g A-Komponente] | | 0.2 | 0.25 | 0.3 | 0.4 | 0.2 | 0.25 | 0.3 | 0.4 |
| Anteil GDMP [g/100g A-Komponente] | | 0.3 | 0.3 | 0.3 | 0.3 | 0.3 | 0.3 | 0.3 | 0.3 |
| Gewichtsmenge Isocyanat-Komponente auf 100g A-Komp [g] | | 33.5 | 33.5 | 33.5 | 33.5 | 33.5 | 33.5 | 33.5 | 33.5 |
| | | | | | | | | | |
| NCO/K | | 579.3 | 463.4 | 386.2 | 289.6 | 579.3 | 463.4 | 386.2 | 289.6 |
| T/K | | 8.0 | 6.4 | 5.3 | 4.0 | 8.0 | 6.4 | 5.3 | 4.0 |
| | | | | | | | | | |
| TZ 40°C [min] | | 118 | 99 | 72 | 40 | 77 | 59 | 45 | 30 |
| Shore A | t (h) | | | | | | | | |
| | 1.5 | | | | | | | 58,9 | 72,7 |
| | 2 | | | | 72,2 | | 60,2 | 66,3 | 76.7 |
| | 2.5 | | | | 74,5 | | 71.8 | 77,2 | 80.2 |
| | 3 | | | 69,5 | 77,7 | 62,3 | 78 | | 81.3 |
| | 3.5 | | 64,6 | 74.1 | | 75 | | 79.9 | 82.4 |
| | 4 | | 70,7 | 76,6 | 78,5 | 77.8 | 78.3 | 80.7 | |
| | 5 | 68,2 | 75,7 | 79 | 80.3 | | | | |
| | 6 | 76,3 | 77,6 | 80,5 | 82 | 81,3 | 80.4 | 81.9 | 83.2 |
| | 7 | 79,9 | | | | | | | |
| | 24 | 81.9 | 80.3 | 85.1 | 83.1 | 86.9 | 84.6 | 87.3 | 87.2 |

**Tabelle 4, "lk" = leicht klebrig, "slk" = sehr leicht klebrig**

| | | E9 | E10 | E11 | E12 | E13 | E14 | E15 |
|---|---|---|---|---|---|---|---|---|
| Temperatur/LF | | 18°C/50% | 18°C/50% | 18°C/50% | 18°C/50% | 18°C/50% | 18°C/50% | 18°C/50% |
| Anteil DBTL [g/100g A-Komponente] | | 0.3 | 0.3 | 0.3 | 0.3 | 0.1 | 0.1 | 0.9 |
| Anteil GDMP [g/100g A-Komponente] | | 0.6 | 0.2 | 1.2 | 0.13 | 0.1 | 0.08 | 0.9 |
| Gewichtsmenge Isocyanat-Komponente auf 100g A-Komp [g] | | 34 | 33.5 | 35 | 33.5 | 33.3 | 33.3 | 34.5 |
| | | | | | | | | |
| NCO/K | | 391.9 | 386.2 | 403.5 | 386.2 | 1151.6 | 1151.6 | 132.6 |
| T/K | | 10.6 | 3.5 | 21.2 | 2.3 | 5.3 | 4.2 | 5.3 |
| | | | | | | | | |
| TZ 40°C [min] | | 109 | 25 | 290 | 13 | 56 | 43 | 50 |
| Shore A | t (h) | | | | | | | |
| | 1.5 | | 71.9 | | 75.8 | | | 69.7 |
| | 2 | | 77.1 | | 77.8 | | 40,1 | 76.6 |
| | 2.5 | | 78.4 | | 78.2 | | | 81,5 |
| | 3 | | 79.7 | | 79 | 61,0 lk | 63,1 lk | |
| | 3.5 | 65,5 lk | | | 80.1 | 69,9 lk | 71,1 lk | 82,3 |
| | 4 | 76.6 | 81.4 | | 80.8 | 75,8 lk | 77,2 lk | |
| | 5 | 81.3 | 82.2 | | | | | |
| | 6 | | | 72,0 lk | | 80,7 slk | 80,3 slk | 84,0 |
| | 7 | 83.3 | 82.6 | | 82.4 | | | |
| | 24 | 86.6 | 85.5 | 83.6 | 83.7 | 85,1 slk | 84,8 slk | 85.6 |

**Tabelle 5, "k" = klebrig**

| | | E16 | E17 | E18 | E19 | E20 |
|---|---|---|---|---|---|---|
| Temperatur/LF | | 23°C/50% | 23°C/50% | 23°C/50% | 23°C/50% | 35°C/50% |
| Anteil DBTL [g/100g A-Komponente] | | 0.2 | 0.2 | 0.2 | 0.4 | 0.1 |
| Anteil GDMP [g/100g A-Komponente] | | 0.3 | 0.4 | 0.5 | 0.8 | 0.3 |
| Gewichtsmenge Isocyanat-Komponente auf 100q A-Komp [g] | | 33.5 | 33.5 | 33.7 | 34.1 | 33.5 |
| | | | | | | |
| NCO/K | | 579.3 | 579.3 | 582.7 | 294.8 | 1158.6 |
| T/K | | 8.0 | 10.6 | 13.3 | 10.6 | 15.9 |
| | | | | | | |
| TZ 40°C [min] | | 27 | 39 | 52 | 44 | 32 |
| Shore A | t (h) | | | | | |
| | 1.5 | 76,8; k | 73,1; k | | 64,7; k | 78,4 |
| | 2 | 81,1 | 79.5 | 73,8 | 76 | 80,6 |
| | 2.5 | | | | | |
| | 3 | 83,7 | 79,9 | 80,7 | 83,3 | |
| | 3.5 | | | | | |
| | 4 | 84 | 84 | 84,5 | 83,9 | |
| | 5 | | | | | |
| | 6 | | | | | |
| | 7 | | | | | |
| | 24 | | | | | |

**Tabelle 6, "f/k" = flüssiger und klebriger Film auf Oberfläche, keine Shore A-Bestimmung möglich**

| | | Ref. 1 | Ref. 2 | Ref. 3 | Ref. 4 |
|---|---|---|---|---|---|
| Temperatur/LF | | 23°C/50% | 23°C/50% | 23°C/50% | 23°C/50% |
| Anteil Coscat 83 [g/100g A-Komponente] | | 0,2 | 0,2 | 0,2 | 0,3 |
| Anteil GDMP [g/100g A-Komponente] | | 0.1 | 0.05 | 0.2 | 0.4 |
| Gewichtsmenge Isocyanat-Komponente auf 100g A-Komp [g] | | 33.4 | 33.3 | 33.5 | 33.9 |
| | | | | | |
| NCO/K | | 661.0 | 659.0 | 663.0 | 447.3 |
| T/K | | 3.0 | 1.5 | 6.1 | 8.1 |
| | | | | | |
| TZ 40°C [min] | | 17 | 4 | 44 | 72 |
| Shore A | t (h) | | | | |
| | 1.5 | f/k | f/k | f/k | f/k |
| | 2 | f/k | f/k | f/k | f/k |
| | 2.5 | f/k | f/k | f/k | f/k |
| | 3 | f/k | f/k | f/k | f/k |
| | 3.5 | f/k | f/k | f/k | f/k |
| | 4 | f/k | f/k | f/k | f/k |
| | 5 | f/k | f/k | f/k | f/k |
| | 6 | f/k | f/k | f/k | f/k |
| | 7 | n.b | n.b | n.b | n.b |
| | 24 | n.b | n.b | n.b | n.b |

**Tabelle 7, alle Versuche für TZ 50°C temperiert bei Temperatur 23°C / Luftfeuchtigkeit 50%**

| | Verbindung T | | MW | Funktionalität | TZ 50°C [min] | (T/K) | (NCO/K) |
|---|---|---|---|---|---|---|---|
| E21 | GDMP | Thiocure 320 | 238.3 | 2 | 17 | 7.3 | 333.2 |
| E22 | MWK3 | Thiocure 330 | 398.6 | 3 | 18 | 7.3 | 333.2 |
| E23 | MWG4 | Thiocure 341 | 1350 | 4 | 23 | 7.5 | 333.2 |

**Tabelle 8, alle Versuche für TZ 40°C, respektive TZ 50°C, temperiert bei Temperatur 23°C / Luftfeuchtigkeit 50%**

| | Zinnkatalysator | MW [g/mol] | Anzahl Schwefelliganden im Katalysator | TZ 50°C [min] | TZ 40°C [min] | Shore A >75 23°C/50% [h] | (T/K) | (NCO/K) |
|---|---|---|---|---|---|---|---|---|
| E24 | DABCO T120 | 635,7 | 2 | 17 | | 2 | 7.3 | 333.2 |
| E25 | Fomrez UL 22 | 551,6 | 2 | 25 | | 3 | 8.94 | 333.2 |
| E26 | Fomrez UL 32 | 747,9 | 2 | 28 | | 3 | 8.3 | 392.0 |
| E27 | TIB Kat 320 | 631,6 | 0 | 27 | | 2,5 | 7.95 | 574.2 |
| E16 | DBTL | 631,5 | 0 | | 27 | 1,5 | 8.0 | 579.3 |
| E28 | TIB Kat 318 | 687,7 | 0 | | 36 | 2 | 8.66 | 625.1 |

## Patentansprüche

1. Polyurethanzusammensetzung umfassend eine erste Komponente **A** und eine zweite Komponente **B,** wobei
- die erste Komponente **A**
- eine Polyolmischung **P** aufweist, enthaltend
- mindestens ein Polyol **P1** mit einem durchschnittlichen Molekulargewicht von 800 bis 30'000 g / mol, vorzugsweise 850 bis 20'000 g / mol, bevorzugter 900 bis 10'000 g / mol, wobei das Polyol **P1** :
ein polyhydroxyfunktionelles Fett und / oder ein polyhydroxyfunktionelles Öl ist, oder
ein Polyol, das durch chemische Modifizierung von natürlichen Fetten und / oder natürlichen Ölen erhalten wird; und
- vorzugsweise mindestens ein Polyol **P2** ausgewählt aus der Gruppe bestehend aus Polyesterpolyolen und Polyetherpolyolen; und
- die zweite Komponente **B**
- mindestens ein aliphatisches Polyisocyanat **I** umfasst;
wobei die Polyurethanzusammensetzung zusätzlich 5 Gew.-% bis 70 Gew.-%, vorzugsweise 20 Gew.-% bis 50 Gew.-%, mindestens eines Füllstoffs **F,** bezogen auf das Gesamtgewicht der Polyurethanzusammensetzung, aufweist, sowie mindestens einen Zinnkatalysator **K** für die Reaktion von Hydroxylgruppen und Isocyanatgruppen umfasst, der Thiokomplexe bilden kann, und mindestens eine Verbindung **T,** die mindestens eine Thiolgruppe aufweist, und das molare Verhältnis aller Thiolgruppen der mindestens einen Verbindung **T** zu allen Metallatomen des mindestens einen Zinnkatalysators **K** (**T/K**) von 2.2:1 bis 40:1 liegt und das molare Verhältnis aller NCO-Gruppen der Polyurethanzusammensetzung zu allen Metallatomen des mindestens einen Zinnkatalysators **K (NCO/K)** von 50 bis 1500 liegt.

2. Polyurethanzusammensetzung gemäss Anspruch 1, **dadurch gekennzeichnet, dass** das Polyol **P1** Rizinusöl oder eine chemische Modifikation davon ist, insbesondere eine chemische Modifikation von Rizinusöl, besonders bevorzugt ein Reaktionsprodukt von Rizinusöl mit Ketonharzen.

3. Polyurethanzusammensetzung gemäss Anspruch 1 oder 2, **dadurch gekennzeichnet, dass** es sich bei dem Polyol **P1** um ein Polyol mit einer OH-Zahl von 110 bis 200 mg KOH / g handelt, bevorzugt mit einer OH-Zahl von 140 bis 190 mg, insbesondere 140 bis 170 mg, insbesondere bevorzugt 150 bis 170 mg KOH / g.

4. Polyurethanzusammensetzung gemäss einem der vorhergehenden Ansprüche, **dadurch gekennzeichnet, dass** das Polyol **P2** eine OH-Zahl im Bereich von 20 bis 600 mg KOH/g, 50 bis 600 mg KOH/g, 100 bis 600 mg KOH/g, insbesondere 200 bis 600 mg KOH/g, 300 bis 600 mg KOH/g, besonders bevorzugt 350 bis 600 mg KOH/g, aufweist.

5. Polyurethanzusammensetzung gemäss einem der vorhergehenden Ansprüche, **dadurch gekennzeichnet, dass** es sich bei dem Polyol **P2** um ein Polyetherpolyol handelt, insbesondere ausgewählt aus der Liste bestehend aus Polyoxyethylenpolyol, Polyoxypropylenpolyol und Polyoxypropylenpolyoxyethylenpolyol, bevorzugt Polyoxyethylendiol, Polyoxypropylendiol, Polyoxyethylentriol, Polyoxypropylentriol, Polyoxypropylenpolyoxyethylendiol und Polyoxypropylenpolyoxyethylentriol, am meisten bevorzugt ist Polyoxypropylentriol.

6. Polyurethanzusammensetzung gemäss einem der vorhergehenden Ansprüche, **dadurch gekennzeichnet, dass** das Gewichtsverhältnis des Polyols **P1** zum Polyol **P2** ((**P1**) / (**P2**)) von 1,25 bis 2,5, vorzugsweise 1,5 bis 2,25, am meisten bevorzugt 1,75 bis 2,0, beträgt.

7. Polyurethanzusammensetzung gemäss einem der vorhergehenden Ansprüche, **dadurch gekennzeichnet, dass** die Gesamtmenge der Summe des Polyols **P1** und des Polyols **P2** mehr als 75 Gew .-%, vorzugsweise mehr als 80 Gew .-%, als 90 Gew .-%, als 95 Gew .-%, insbesondere mehr als 98 Gew .-%, der Polyolmischung **P** beträgt.

8. Polyurethanzusammensetzung gemäss einem der vorhergehenden Ansprüche, **dadurch gekennzeichnet, dass** die Polyolmischung **P** mehr als 80 Gew .-%, mehr als 90 Gew .-%, mehr als 95 Gew .-%, insbesondere mehr als 98 Gew .-%, der Gesamtmenge der NCO-reaktiven Gruppen der Polyurethanzusammensetzung aufweist.

9. Polyurethanzusammensetzung gemäss einem der vorhergehenden Ansprüche, **dadurch gekennzeichnet, dass** es sich bei dem Zinnkatalysator **K** um eine Organozinn-Verbindung, insbesondere um eine Organozinn (IV)-Verbindung handelt.

10. Polyurethanzusammensetzung gemäss einem der vorhergehenden Ansprüche, **dadurch gekennzeichnet, dass** der Zinnkatalysator **K** nur in einer dritten Komponente **C,** bei welcher es sich nicht um die erste Komponente **A** oder die zweite Komponente **B** handelt, enthalten ist, vorzugsweise ist zusätzlich die Verbindung **T** nur in der dritten Komponente **C** enthalten.

11. Polyurethanzusammensetzung gemäss einem der vorhergehenden Ansprüche, **dadurch gekennzeichnet, dass** es sich bei der Verbindung **T** um Verbindungen mit 1 bis 6, insbesondere 2 bis 4, am meisten bevorzugt 2 oder 3 Thiolgruppen, handelt.

12. Polyurethanzusammensetzung gemäss einem der vorhergehenden Ansprüche, **dadurch gekennzeichnet, dass** das molare Verhältnis (**T/K**) 2.5:1 bis 30:1, insbesondere 3:1 bis 20:1, 3:1 bis 18:1, 3:1 bis 16:1, 3:1 bis 15:1, 3:1 bis 12:1, 4:1 bis 10:1, am meisten bevorzugt 5:1 bis 9:1, beträgt.

13. Polyurethanzusammensetzung gemäss einem der vorhergehenden Ansprüche, **dadurch gekennzeichnet, dass** das molare Verhältnis (**NCO/K**) 100 bis 1300, vorzugsweise 125 bis 1200, 200 bis 1150, 250 bis 1000, 300 bis 800, am meisten bevorzugt 400 bis 700, beträgt.

14. Polyurethanzusammensetzung gemäss einem der vorhergehenden Ansprüche, **dadurch gekennzeichnet, dass** die Polyurethanzusammensetzung folgende molare Verhältnisse (**T/K**) und (**NCO/K**) aufweist:
- (**T/K**): 3.5-6, 3.5-5, bevorzugt 3.5-4.5, und (**NCO/K**): 200-500, insbesondere 250-400; oder
- (**T/K**): 4-7, 4.5-6, bevorzugt 5-6, und (**NCO/K**): 350-600, 400-550, insbesondere 450-550; oder
- (**T/K**): 7-12, bevorzugt 7-10, und (**NCO/K**): 400-800, 500-700, insbesondere 550-650; oder
- (**T/K**): 10-40, insbesondere 10-30, 12-25, 12-20, 12-18, 14-18, bevorzugt 15-17, und (**NCO/K**): 800-1300, 1000-1300, 1100-1300, insbesondere 1150-1250.

15. Packung bestehend aus einer Verpackung enthaltend die Polyurethanzusammensetzung gemäss Anspruch 1 - 14 mit mindestens zwei, insbesondere mindestens drei, vorzugsweise drei oder vier, am meisten bevorzugt drei, voneinander getrennten Kammern, welche jeweils eine erste Komponente **A** oder eine zweite Komponente **B,** wie sie für die Polyurethanzusammensetzung gemäss Anspruch 1 - 14 beschrieben sind, enthalten, oder vorzugsweise eine dritte Komponente **C,** wie sie für die Polyurethanzusammensetzung gemäss Anspruch 10 beschrieben ist.

16. Verfahren zur Herstellung eines Bodenbelags unter Verwendung einer Polyurethanzusammensetzung gemäss Anspruch 1 - 14, wobei das Verfahren umfasst:
a) Mischen der ersten Komponente **(A)** und der zweiten Komponente **(B),** sowie des mindestens einen Füllstoffs **F,** des mindestens einen Zinnkatalysators **K** sowie der mindestens einen Verbindung **T;**
b) Aufbringen des gemischten Materials auf ein Substrat,
c) gegebenenfalls Glätten des aufgetragenen Mischmaterials und
d) Härten des aufgetragenen Mischmaterials, um einen Bodenbelag zu erhalten.

17. Verfahren gemäss Anspruch 16, **dadurch gekennzeichnet, dass** die Schritte a) - d) in dem nachfolgend beschriebenen Temperaturbereich mit folgendem molaren Verhältnis aller Thiolgruppen der mindestens einen Verbindung **T** zu allen Metallatomen des mindestens einen Zinnkatalysators **K** (**T/K**) ausgeführt werden:
1) 28 bis 37.5°C, molares Verhältnis (**T/K**) = 10-40, insbesondere 10-30, 12-25, 12-20, 12-18, 14-18, bevorzugt 15-17; und/oder
2) 20 bis 28°C, molares Verhältnis (**T/K**) = 3-30, insbesondere 4-25, 4-20, 5-15, 6-12, 7-12, bevorzugt 7-10; und/oder
3) 15 bis 20°C, molares Verhältnis (**T/K**) = 2.5-25, insbesondere 3-20, 3-15, 3-12, 3-10, 3.5-8, 4-7, 4.5-6, bevorzugt 5-6; und/oder
4) 8 bis 15°C, molares Verhältnis (**T/K**) = 2.5-20, insbesondere 2.5-15, 2.5-10, 2.5-8, 3-7, 3.5-6, 3.5-5, bevorzugt 3.5-4.5.

18. Verfahren gemäss Anspruch 17, **dadurch gekennzeichnet, dass** das molare Verhältnis aller NCO-Gruppen der Polyurethanzusammensetzung zu allen Metallatomen des mindestens einen Zinnkatalysators **K** (**NCO/K**) bei den Nummer 1)-4) folgenden Wert aufweist:
1) (**NCO/K**):500-1500, 800-1300, 1000-1300, 1100-1300, insbesondere 1150-1250,
2) (**NCO/K**):200-1200, 300-1000, 400-800, 500-700, insbesondere 550-650,
3) (**NCO/K**):200-800, 300-700, 350-600, 400-550, insbesondere 450-550,
4) (**NCO/K**): 100-800, 125-700, 150-600, 200-500, insbesondere 250-400.

19. Verfahren gemäss Anspruch 16 oder 17, **dadurch gekennzeichnet, dass** in Schritt a) eine Packung gemäss Anspruch 15, insbesondere mit einer dritten Komponente **C,** verwendet wird.

20. Verwendung einer Polyurethanzusammensetzung gemäss einem der Ansprüche 1 - 14 als Bodenbelag.
